Europäisches Patentamt

European Patent Office

Office européen des brevets

(11) Publication number: **0 377 512**
**A1**

## (12) EUROPEAN PATENT APPLICATION

(21) Application number: **90300097.4**

(51) Int. Cl.⁵: **G11B 33/04, G11B 23/02**

(22) Date of filing: **04.01.90**

(30) Priority: **05.01.89 GB 8900180**
**07.02.89 GB 8902650**

(43) Date of publication of application:
**11.07.90 Bulletin 90/28**

(84) Designated Contracting States:
**AT BE CH DE DK ES FR GR IT LI LU NL SE**

(71) Applicant: **TINSLEY ROBOR PLC**
**Drayton House Drayton**
**Chichester West Sussex PO20 6EW(GB)**

(72) Inventor: **Christian, Derek**
**Hundred Steddles Lane - Birdham -**
**Chichester West Sussex PO20 7HZ(GB)**

(74) Representative: **Needle, Jacqueline et al**
**W.H. BECK, GREENER & CO 7 Stone**
**Buildings Lincoln's Inn**
**London WC2A 3SZ(GB)**

(54) **A container.**

(57) A container (2) for a compact disc has two spaced, opposed side walls (4) connected by a perimetral wall defined by three end panels (6). The total surface area of the side walls (4) exceeds the surface area of said perimetral wall. An access opening (8) is formed in the perimetral wall, and a closure member (10) is movable between an open position and a closed position in which the access opening is closed. The container (2) is formed by injection moulding plastics material to form a blank (20) and then folding and welding the blank (20) to form the container. As the access opening (8) is formed in the perimetral wall, all of the surface area of the two side walls is available for the affixation of labels or other printed matter.

FIG.1.

## A CONTAINER

The present invention relates to a container for a single article, for example, for a compact disc.

At present, compact discs are housed in cases of which one of the large side walls of the case forms a lid. Access is had to the compact disc by hinging open this side wall. The compact disc is held within the case by engagement means which engage in the hole in the centre of the disc and, to remove the disc, it is necessary to disengage these engagement means. It is not practicable to remove a compact disc from its case using only one hand, and, because of the size of the hinged side wall, the opened container requires more space than does the closed container.

As compact disc players for use in cars become more popular, and as portable compact disc players for wearing on the person become available, there is a need for a container for a compact disc from which it is easy to remove the compact disc, even in a relatively confined space. It would also be advantageous if the disc could be removed using only one hand.

It would be preferred to fabricate such a container from plastics material, but it has been found that there are significant problems in injection moulding plastics material to form a suitable container.

According to a first aspect of the present invention there is provided a container, said container comprising two opposed side walls connected by a perimetral wall, the total surface area of said side walls exceeding the surface area of said perimetral wall, an access opening formed in said perimetral wall, and a closure member movable between a closed position in which the access opening is closed and an open position, wherein the container has been formed by injection moulding plastics material to form a substantially flat blank which is then folded and welded to define at least the side walls and said perimetral wall of the container.

Forming the container from a plastics material blank by folding and welding overcomes the significant problems met if a similar container is made by injection moulding.

Although the container is specifically designed for housing a compact disc, it could be used to hold other articles.

In a preferred embodiment, said closure member is defined by a closure structure integrally formed with said blank and connected thereto by hinge means. Preferably, said hinge means has been worked when said blank has been injection moulded to form a hinge connecting said closure member to walls of said container.

As the access opening is formed in the perimetral wall, all of the surface area of the two side walls is available for the affixation of labels or other printed matter. Advantageously, a single label is wrapped around said container and is affixed to both side walls. The label may be self-adhesive and may extend around part of the perimetral wall. In an embodiment, said single label is affixed to both side walls and extends across and is affixed to a panel of said perimetral wall intermediate said side walls. For example, said label may be affixed to both side walls and extends across and is affixed to at least two panels of said perimetral wall which are each intermediate said side walls.

According to a further aspect of the invention there is provided a container, said container comprising two opposed side walls connected by a perimetral wall, the total surface area of said side walls exceeding the surface area of said perimetral wall, an access opening formed in said perimetral wall, wherein a single label is wrapped around said container and is affixed to both of said side walls.

In an embodiment, a closure member is provided and is movable between a closed position in which the access opening is closed and an open position. In its closed position said closure member may be arranged to maintain said opposed side walls spaced relative to one another.

Preferably, engagement means are provided on the closure member and/or on the container for retaining the closure member in its closed position. For example, snap-fittings such as lugs for engagement with the container may be carried on the closure member.

In a preferred embodiment, the two opposed side walls have flexibility and can be caused to approach one another when the closure member is in its open position. For example, the container may be formed from a plastics material and arranged such that the side walls have a tendency to bow inwardly adjacent the access opening.

Preferably, the closure member carries rib means arranged to engage within the access opening and between said side walls in its closed position. For example, said rib means may comprise two spaced, substantially parallel, elongate ribs which project from the internal surface of said closure member and extend along said closure member.

Locating means may be carried by the container to engage an article within the container. However, in a preferred embodiment where the article is a compact disc, protrusions will be provided centrally of the compact disc for engagement with the side walls to maintain the compact disc in a predetermined position within the closed container. Release of the compact disc can be obtained, once the closure member has been opened, by applying pressure to two opposed parts of the perimetral wall to cause the side walls to bow outwardly.

In a preferred embodiment, one or more partition walls are arranged to extend within the container, laterally of and extending between the side walls, to divide the container into two or more compartments. The closure member, in its closed position, may be arranged to maintain each side wall spaced from the adjacent partition wall. Where two or more partition walls are provided, the closure member may be arranged in its closed position to maintain adjacent partition walls spaced.

The present invention also extends to a container, said container comprising two opposed side walls connected by a perimetral wall, the total surface area of said side walls exceeding the surface area of said perimetral wall, an access opening formed in said perimetral wall, and a closure member movable between a closed position in which the access opening is closed and an open position, wherein one or more partition walls are arranged to extend within the container, laterally of and extending between the side walls, to divide the container into two or more compartments.

As previously, the closure member may be provided with rib means arranged to engage between adjacent side and partition walls in the closed position of the closure member.

In one embodiment, the or each partition wall is connected at its edges to said perimetral wall. In an alternative embodiment, the or each partition wall is carried by said closure member such that in the open position of the closure member, the or each partition wall is removed from the container. In this alternative embodiment of the invention it is particularly advantageous for locating means for the articles to be housed in the container to be carried by the or each said partition wall. For example, where the container is for receiving compact discs appropriate spigot means may be fixed on one or both sides of each partition wall.

Of course, locating means other than spigot means could be provided if required. For example, means arranged to engage the outer periphery of the or each article could be provided within the container or within each compartment in the case of a divided container.

In a preferred embodiment the side walls are rectangular and the perimetral wall is comprised of three end panels connecting three edges of the side walls. The access opening is defined between the fourth edges of the side walls such that the container has an open end. Where the article or articles to be housed in the container are compact discs, perhaps together with an explanatory booklet, the side walls are preferably square. In one embodiment, the closure member is a panel hinged to one of the end panels and arranged in its closed position to form a fourth end panel for the container. Alternatively, the closure member may be hingedly connected to an edge of one of the side walls. In an alternative embodiment, the closure member is a removable panel arranged to be engaged with the container to form a fourth end panel in its closed position.

Slots or cutouts may be provided in the side walls and/or in any partition walls adjacent the access opening to assist in the removal of an article or articles from the container. However, if required spring means may be provided in the container, and/or in individual compartments if the container is divided, to aid in the ejection of the contents. For example, said spring means may comprise a flap, hingedly connected to said perimetral wall opposite to the outlet opening, and biased to a position spaced from said perimetral wall.

The invention also extends to a container comprising two spaced, opposed side walls connected by a perimetral wall, the total surface area of the side walls exceeding the surface area of said perimetral wall, and an access opening formed in said perimetral wall, wherein said side walls are arranged such that the application of pressure to two opposed parts of the perimetral wall is arranged to bow the side walls outwardly to assist in the release of an article within the container through the access opening.

The invention also extends to a method of making a container, said container comprising two opposed side walls connected by a perimetral wall, wherein the total surface area of said side walls exceeds the surface area of said perimetral wall, and the perimetral wall is composed of three end panels connecting three edges of the side walls, an access opening being defined between the fourth edges of the side walls such that the container has an open end, the method comprising the steps of injection moulding plastics material to form a blank, and folding and welding the blank to form said container.

In an embodiment, said blank is formed to have two substantially identically sized and shaped panels separated by a transversely extending structure, and wherein ribs project from and extend along edges of said panels, said structure being arranged to define one end panel, and corresponding ribs being arranged to abut to define other end panels.

According to a further aspect of the present invention, there is provided a blank for forming a container, said blank being formed of plastics material and being substantially rectangular in shape, wherein said blank has a centrally arranged, substantially transversely extending structure arranged to space two substantially square panels, and wherein two edges of each said panel are provided with upstanding, elongate ribs.

Preferably, one rib of one panel is colinear with a corresponding rib of the other panel, and wherein said transversely extending structure comprises an elongate rib spaced from each said panel and connected thereto by way of an elongate area of reduced thickness.

In an embodiment, a closure member is integrally formed with said blank and is connected thereto by hinge means.

Embodiments of the present invention will hereinafter be described, by way of example, with reference to the accompanying drawings, in which:-

Figure 1 shows a perspective view, partly in section, of an embodiment of a container of the present invention,

Figure 2 shows a plan view of an injection moulded blank for forming the container of Figure 1,

Figures 3A to 3E show enlarged details of the blank of Figure 1,

Figure 4 shows a perspective view of a further embodiment of the container, and

Figures 5A and 5B illustrate a further embodiment of the invention where the container is formed in two parts.

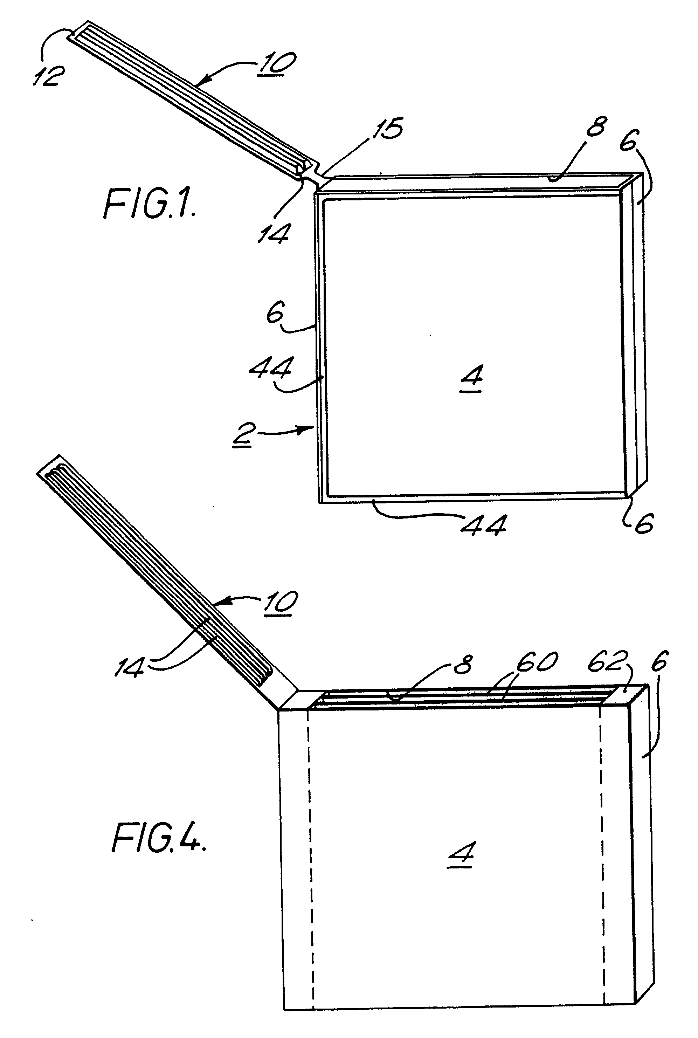

The container 2 shown in Figure 1 is preferably made from a transparent or opaque plastics material, for example, polypropylene by a process described below. The container has two spaced, square, opposed side walls 4 connected along three edges by a respective end panel 6. The remaining edges of the side walls 4 are left open whereby an upper access opening 8 extending over the full width of the container is defined. The side panel 6 and the access opening 8 together define a perimetral wall connecting the side walls 4.

The container 2 is also provided with a closure member 10 for closing the access opening 8. This closure member comprises a panel 12 hingedly connected by hinge means 15 along one of its short edges to an end panel 6 adjacent the access opening 8. The panel 12 is sized and arranged such that when it is in its closed position it forms a fourth end panel for the container. The interior surface of the panel 12 carries rib means 14 arranged to engage within the access opening 8 and between the side walls 4. The engagement of the rib means 14 within the side walls 4 holds the closure member 10 in its closed position. In the embodiment shown in Figure 1, the rib means 14 comprises two substantially parallel, longitudinal ribs extending side by side along the interior surface of the panel 12 and projecting from the interior surface. Alternatively, a single longitudinal rib may be provided. Preferably, the closure member 10 is arranged such that the rib means 14 snap-fits into the access opening 8 to retain the closure member 10 in its closed position.

It will be appreciated that the total surface area of the side walls is very much greater than that of the perimetral wall. Of course, both side walls 4 and the end panels 6 can be used for the affixation of labels or other printed material, for example, signifying the contents of the container. By this means, a large surface area for information is made available. A single adhesive label may be provided and may be adhered to one side wall 4, across a selected one of the end panels 6, and then to the other side wall 4. It will be appreciated that as there are three end panels 6 which may be selected, there are three alternative arrangements for arranging a single label which spans two side walls 4 and an intermediate end panel 6. Alternatively, a single label may be adhered to the two side walls 4 and to the two opposed end panels 6 adjacent the access opening 8.

The container described and illustrated in Figure 1 enables compact discs to be housed therein in a dust free environment. Particularly where the container is sized to house 3" compact discs, it is possible for it to be opened using one hand. Thus, the container 2 would be grasped by the two opposed end panels 6 adjacent the access opening 8 between the thumb and fingers. A finger could be used to release the panel 10 from the access opening 8 by applying an upward movement to the free edge of the panel 12 remote from said hinge means 15. If required, the panel 12 could be arranged to project outwardly of the container to facilitate opening. The compact disc can then be released from the container, for example, by tipping the container to move the access opening 8 downwardly. This operation requires very little manual dexterity and makes it easy, for example, to gain access to housed compact discs in the environment of a car or the like.

If required, release of the compact disc held within the container once the closure member 10 has been opened can be facilitated by applying pressure to the opposed end panels 6 to urge the side walls 4 away from each other. Additionally and/or alternatively, cutouts or slots (not shown) may be formed in the side walls 4 adjacent the access opening 8 to enable a compact disc within the container to be grasped for removal. Additionally and/or alternatively, spring means (not shown) may be provided within the container to assist in the removal of a compact disc. For example, the spring means could comprise a substantially planar flap hingedly connected to the interior surface of the bottom end panel 6 and arranged to normally extend at an angle to and spaced from the bottom end panel 6. By this means, a compact disc inserted into the container would press the flap towards the end panel 6 against its natural bias, but opening of the closure member would enable the bias of the flap to lift the disc to protrude relative to the access opening 8.

It is generally required to ensure that a compact disc housed within the container 2 is prevented from movement therein. In this respect, the container 2 can be sized to minimise the room for movement. Furthermore, it is envisaged that generally the disc itself will be provided with centrally located protrusions for engagement with the interior surfaces of the side walls 4. The engagement of these protrusions with the side walls will maintain the compact disc in a predetermined position within the closed container and also prevent the walls of the container contacting the surface of the disc.

The material from which the container 2 is formed, and the thickness of the side walls 4, may be arranged such that the two opposed side walls have flexibility. The application of pressure to the two side walls 4 can cause the side walls to approach one another, and even contact one another, whereby the access opening 8 can be restricted or closed at least along part of its longitudinal extent. In one embodiment, the container 2 is formed such that the side walls 4 have a tendency to bow inwardly, at least adjacent the access opening 8. When the closure member 10 is in its closed position, the rib means 14 maintain the side walls 4 spaced relative to one another, at least adjacent opening 8. The application of pressure to the two opposed end panels 6 can cause the side walls to move away from one another to open the access opening 8. This enables a compact disc to be introduced into or removed from the container.

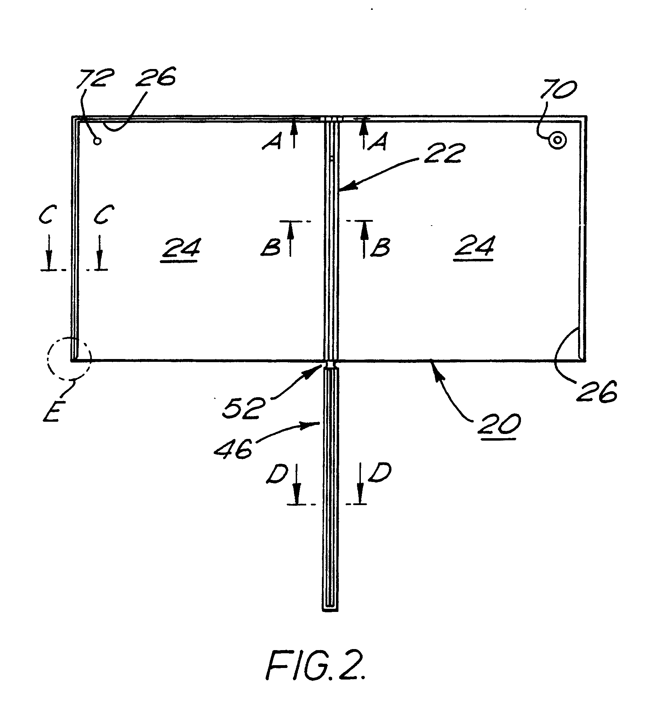

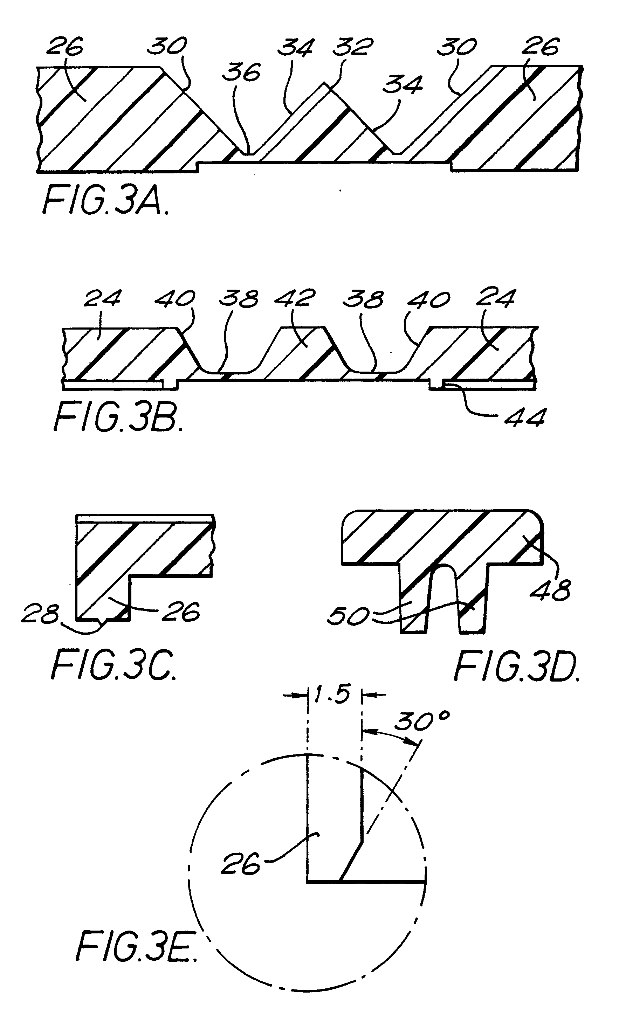

Figures 2 and 3 illustrate a preferred method of manufacturing the container 2 of Figure 1. In this respect, it has been found that when the container is sized to house 3" compact discs it is particularly difficult to make the completed container satisfactorily by injection moulding. As is shown in Figure 2, the container 2 is fabricated by injection moulding a blank out of a plastics material, for example, polypropylene. As described below, the blank is then folded and welded to form the container. In a preferred embodiment of a container for 3" compact discs, the wall thickness of the blank 20 is generally 1.5mm.

In Figure 2, the surfaces of the blank 20 which are to form the inner surfaces of the finished container are visible. It will be seen, that the blank 20 is substantially planar, generally rectangular in shape, and is divided substantially centrally of its longitudinal extent by a substantially transversely extending structure 22. The structure 22 defines within the blank 20 two substantially identically sized and shaped panels 24 which in the embodiment illustrated are each substantially square. In the finished container, these square panels 24 define the side walls 4. Along two adjacent edges, each panel 24 is provided with a respective upstanding elongate rib 26. In the finished container, each rib 26 is arranged to abut a corresponding rib 26 to form an end panel 6. It will be seen that one rib 26 of one panel 24 extends colinear with a corresponding rib 26 of the other panel 24. As can be seen in Figures 2 and 3C, the ribs 26 on one of the panels 24 are each provided with an elongate welding projection 28.

Figure 3A shows a cross-section through the two colinear ribs 26 of the adjacent panels 24, whilst Figure 3B shows a cross-section through the transversely extending structure 22. As can be seen in Figure 3A, facing surfaces 30 of the two colinear ribs 26 are each inclined relative to the plane of the blank 20 and relative to the upstanding ribs 26. Between the facing surfaces 30 of the two ribs 26, a projection 32 which is substantially triangular in cross-section is formed and is arranged to connect the facing surfaces 30. The projection 32 has sloping surfaces 34 which are substantially complementary to the surfaces 30 of the adjacent ribs. The projection 32 is connected to each rib 26 by way of a respective reduced thickness hinge portion 36.

The blank 20 shown in Figure 2, is folded to form the container 2. In this respect, each of the two colinear ribs 26 is folded about the respective hinge portion 36 so that the two ribs 26 abut and extend substantially parallel to one another. The surface 30 of each rib 26 generally abuts, and is supported by, a respective sloping surface 34 of the projection 32.

The transversely extending structure 22 is shaped to facilitate folding of the blank 20. In this respect, and as apparent from Figure 3B, the blank 20 is formed to have an elongate area 38, having a reduced thickness, adjacent to an inner transversely extending edge 40 of each panel 24. The two reduced thickness, elongate areas 38 are connected by an elongate rib 42 which extends transversely of the blank 20 and has a cross-sectional shape in the form of a truncated triangle. It will be seen that said elongate rib 42 is spaced from each said panel 24, and is connected thereto, by way of a respective elongate area 38. When the blank 20 is folded, folds are made in the reduced thickness areas 38 to enable the two panels 24 to extend, spaced, and substantially parallel to one another. The shaping of the edges 40 and of the rib 42 enables the folding to take place. When the two panels 24 have been folded about appropriate axes extending along the reduced thickness areas 38, the areas 38 and the elongate rib 42 together form that end panel 6 of the completed container 2 to which the closure panel 10 is connected. It will be appreciated, that the rib 42 provides internal strengthening for this end panel 6.

It will be appreciated that when the blank 20 has been folded as described, the two ribs 26 of one of the panels 24 abut the two ribs 26 of the other panel 24. Furthermore, between each pair of abutting ribs 26 there is a welding projection 28. The abutting ribs are then welded, for example ultrasonically, such that the ribs 26 form two of the end panels 6 of the container 2, whilst the elongate rib 42 and the reduced thickness areas 38 on either side thereof form the third end panel 6.

It is, of course, important to ensure that the folded blank is accurately aligned before it is welded. Preferably, and as shown locating means are provided to hold the folded blank in position during welding. These locating means comprise an internally bored spigot 70 formed on the interior surface of one panel 24 and a co-operating pin 72 formed on the interior surface of the other panel 24. When the blank 20 is folded, the pin 72 is arranged to snap fit into the bore of the spigot 70 to locate the components thereof, and to hold them in the correct position during welding.

In the completed container, the engaged spigot 70 and pin 72 will define a cylindrical projection connecting the two side walls 4 proximate to one of the bottom corners thereof. This projection will act to locate the compact disc within the container and to prevent movement of the compact disc within the container.

As is apparent from Figures 3B and 1, elongate ribs 44 may be provided on the outer surface of each side wall 4 and extend along three edges of each said side wall. These external ribs 44 can be used to facilitate the location of a label on each respective side wall 4.

The manner in which the container 2 with its open access opening 8 is formed has therefore been described.

The blank 20 is integrally formed with an additional transversely extending closure structure 46 arranged to form the closure member 10 of the completed container. It will be seen from Figures 2 and 3D, that the closure structure 46 has a generally elongate extending tongue 48 along which two spaced, substantially parallel, upstanding ribs 50 extend. These ribs 50 form the two spaced ribs of the rib means 14. The closure structure 46 is connected to the blank 20 by way of hinge means 52. As is shown, the hinge means 52 is a panel formed to have curved, opposed edges whereby the hinge panel 52 has a generally waisted shape.

It will be appreciated that the closure structure 46 is arranged adjacent the two edges of the panels 24 which will eventually define the access opening 8 in the completed container.

It has been found that when the blank 20 has been formed by injection moulding, it is important to move the closure structure 46 relative to the plane of the blank 20 before the material of the blank cools. This works the material in the hinge means 52 and enables a "living hinge" to be formed.

Figure 3E, shows an enlargement of the detail in the circle E of Figure 2. The free end of the opposed upstanding rib 26 of the panels 24 are shaped to define an edge extending at an angle of 30° to the longitudinal extent of the rib 26.

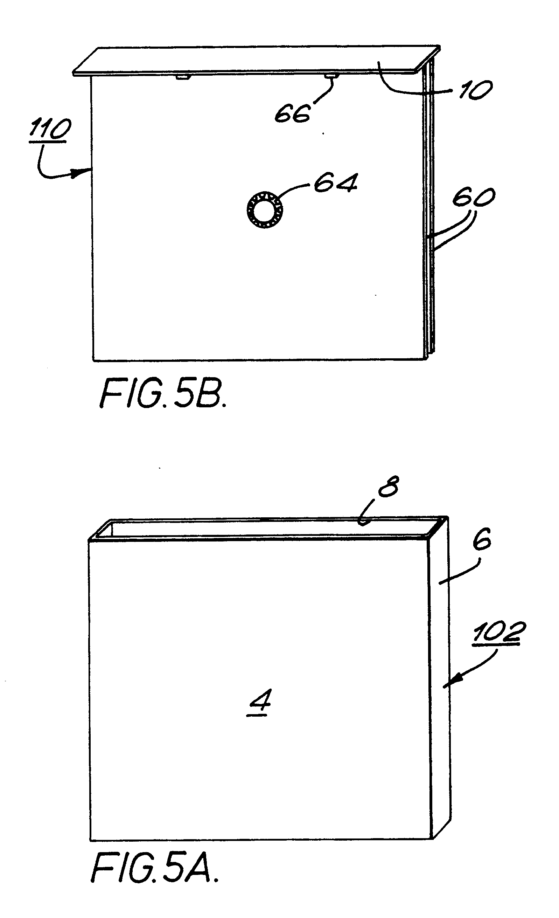

Figure 4 shows a further embodiment of a container of the invention designed to house more than one compact disc. This container 2 is similar in many respects to that described with reference to Figure 1 and accordingly the same reference numerals have been used in Figure 4 to refer to features which are the same or similar to those of the embodiment of Figure 1.

The container of Figure 4 is divided into a number of compartments by the use of partition walls 60. Of course, as many compartments can be defined as are needed for any particular purpose. In the illustrated container, two partition walls 60 are arranged to extend within the container laterally of and extending between the side walls 4. These partition walls 60 divide the container into three compartments which may be used to house three compact discs or two discs and an accompanying booklet.

The partition walls 60 may be arranged to have flexibility such that application of pressure to the two side walls 4 causes the side walls and the partition walls to approach each other to restrict access to the compartments. In this case, the rib means 14 carried by the closure member 10 comprises three separate ribs each arranged to engage in a respective compartment. Thus, in its closed position, the closure member 10 is arranged to maintain each partition wall 60 spaced from its adjacent partition or side wall 60, 4. Alternatively, the side walls 4 may be arranged to bow inwardly, and a single rib means 14 is then arranged to engage in the access opening 8 to maintain the side walls spaced. In this case it may be necessary for the height of the partition walls 60 to be less than that of the side walls 4 to enable engagement of the rib means 14 between the side walls 4. In the embodiment shown in Figure 4, a respective spacer 62 is formed to extend within the container, over its height, adjacent each of the opposed end panels 6. These spacers 62 aid in locating the compact discs within the container. In addition, central protrusions on the discs can be arranged to engage appropriate side and partition walls 4, 60 to retain the compact discs in a predetermined position within the container.

Figures 5A and 5B show a modified embodiment of a multi-compartment container which is formed in two parts. The first part, illustrated in Figure 5A comprises a case 102 having two opposed side walls 4 connected by three end panels 6 whereby an access opening 8 is defined. The second removable part 110 comprises a closure member 10 formed to carry one or more spaced partition walls 60. It will immediately be appreciated that by inserting the part 110 into the case 102, a closed container whose configuration is substantially the same as that shown in Figure 4 will be produced. However, the removable part 110 is also provided with appropriate means 64 for supporting one or more compact discs. This means that access to the compact discs can be simply obtained by removing the removable part 110 from the case 102.

In the embodiment illustrated in Figure 5, each partition wall 60 is provided on its outwardly facing surface with a respective central projecting spigot 64 arranged to engage in the central hole of a compact disc. This spigot 64 may be constructed in known manner such that pressure has to be applied directly to the spigot to enable the disc to be released therefrom. The space defined between the two partition walls 60 can be used to house an appropriate booklet.

It will be seen that the closure member 10 of the removable part 110 is provided with appropriate projections 66 so that the removable part 110 carrying the compact discs can be clipped into the case 102.

All of the containers described and illustrated enable a single adhesive label to be wrapped around the container thereby making available a large surface area for information. Furthermore, all of the illustrated containers are formed by making one or more blanks by injection moulding and then folding and welding as appropriate. Ultrasonic welding is generally preferred.

In the embodiment described with reference to Figure 1, spring means constituted by a single flap are envisaged. It would be possible to provide two flaps if required.

The exterior surface of the closure member in any of the embodiments may be provided with a hook or other hanging means to facilitate the display of the container, for example, at the point of sale.

In the embodiments described above, the closure member comprises a panel hingedly connected along one of its short edges to an end panel of the container. The hinge between the closure member and the end panel may be short, particularly where the container is sized to house only one, small compact disc, for example, a 3" disc, and such a short hinge could be weak. Accordingly, the closure member could alternatively be hinged along one of its long edges to a side wall of the container. If required, the closure member could be designed as a "flip top" lid having co-operating engagement means on a long edge of the closure member and on the edge of the corresponding side wall.

In the illustrated embodiments, the two end panels 6 formed by abutting ribs 26 have a substantially planar internal surface. For stability, at least the internal surface of the bottom end panel may have a curved internal surface, or may be provided with an elongate rib, for example, similar to the rib defined by the structure 42. In a preferred embodiment, the internal surface of the bottom end panel, or the surface of the elongate rib is concave.

It will be appreciated that other alterations and modifications to the invention as described and illustrated may be made within the scope of this invention.

**Claims**

1. A container, said container comprising two opposed side walls connected by a perimetral wall, the total surface area of said side walls exceeding the surface area of said perimetral wall, an access opening formed in said perimetral wall, and a closure member movable between a closed position in which the access opening is closed and an open position, wherein the container has been formed by injection moulding plastics material to form a substantially flat blank which is then folded and welded to define at least the side walls and said perimetral wall of the container.

2. A container as claimed in Claim 1, wherein said closure member is defined by a closure structure integrally formed with said blank and connected thereto by hinge means.

3. A container as claimed in Claim 2, wherein said hinge means has been worked when said blank has been injection moulded to form a hinge connecting said closure member to walls of said container.

4. A container as claimed in any preceding claim, wherein a single label is wrapped around said container and is affixed to both of said side walls.

5. A container as claimed in Claim 4, wherein said single label is affixed to both side walls and extends across and is affixed to a panel of said perimetral wall intermediate said side walls.

6. A container as claimed in Claim 4, wherein said single label is affixed to both side walls and extends across and is affixed to at least two panels of said perimetral wall which are each intermediate said side walls.

7. A container as claimed in any preceding claim, wherein the closure member carries rib means arranged to engage within the access opening and between said side walls in its closed position.

8. A container as claimed in Claim 7, wherein said rib means comprises two spaced, substantially parallel, elongate ribs which project from the internal surface of said closure member and extend along said closure member.

9. A container as claimed in Claim 7 or 8, wherein the two opposed side walls have flexibility and can be caused to approach one another when the closure member is in its open position, and said closure member, in its closed position, is arranged to maintain said opposed side walls spaced relative to one another.

10. A container as claimed in Claim 9, wherein the container is formed such that the side walls have a tendency to bow inwardly adjacent the access opening.

11. A container as claimed in any preceding claim, wherein said side walls are arranged such that the application of pressure to two opposed parts of the perimetral wall is arranged to cause the side walls to bow outwardly.

12. A container as claimed in any preceding claim, further comprising locating means for holding an article in a predetermined position within the container.

13. A container as claimed in any preceding claim, where in one or more partition walls are arranged to extend within the container, laterally of and extending between the side walls, to divide the container into two or more compartments.

14. A container as claimed in Claim 13, wherein the or each partition wall is carried by said closure member such that in the open position of the closure member, the or each partition wall is removed from the container.

15. A container as claimed in Claim 14, for receiving compact discs, wherein appropriate spigot means are fixed on one or both sides of each partition wall.

16. A container as claimed in any preceding claim, wherein the side walls are square and the perimetral wall is comprised of three end panels connecting three edges of the side walls, the access opening being defined between the fourth edges of the side walls such that the container has an open end, and wherein the closure member is a panel hinged to one of the end panels and arranged in its closed position to form a fourth end panel for the container.

17. A method of making a container, said container comprising two opposed side walls connected by a perimetral wall, wherein the total surface area of said side walls exceeds the surface area of said perimetral wall, and the perimetral wall is composed of three end panels connecting three edges of the side walls, an access opening being defined between the fourth edges of the side walls such that the container has an open end, the method comprising the steps of injection moulding plastics material to form a blank, and folding and welding the blank to form said container.

18. A method as claimed in Claim 18, wherein said blank is formed to have two substantially identically sized and shaped panels separated by a transversely extending structure, and wherein ribs project from and extend along edges of said panels, said structure being arranged to define one end panel, and corresponding ribs being arranged to abut to define other end panels.

19. A blank for forming a container, said blank being formed of plastics material and being substantially rectangular in shape, wherein said blank has a centrally arranged, substantially transversely extending structure arranged to space two substantially square panels, and wherein two edges of each said panel are provided with upstanding, elongate ribs.

20. A blank as claimed in Claim 19, wherein one rib of one panel is colinear with a corresponding rib of the other panel, and wherein said transversely extending structure comprises an elongate rib spaced from each said panel and connected thereto by way of an elongate area of reduced thickness.

21. A blank as claimed in Claim 19 or 20, further comprising a closure member integrally formed with said blank and connected thereto by hinge means.

FIG.1.

FIG.4.

FIG.2.

FIG.3A.

FIG.3B.

FIG.3C.

FIG.3D.

FIG.3E.

*110*

66

*10*

*64*

*60*

FIG.5B.

*8*

*6*

*102*

*4*

FIG.5A.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4771883 (A.HERR ET AL) <br> * column 7, line 26 - column 11, line 33; figures * | 1, 7, 12-17 | G11B33/04 <br> G11B23/02 |
| A | | 2, 3 | |
| | --- | | |
| Y | EP-A-086892 (DAI NIPPON INSATSU) <br> * abstract; figures * | 1, 7, 12-17 | |
| A | | 18, 19 | |
| | --- | | |
| A | DE-A-3512736 (SIEMENS) <br> * page 7, line 35 - page 11, line 34; figures * | 1-4, 7, 12, 13, 15-17 | |
| | --- | | |
| A | DE-A-3542341 (E.SCHÄFER) <br> * column 2, line 61 - column 3, line 61; figures * | 1, 7, 12-16 | |
| | --- | | |
| A | US-A-4609105 (K.MANES ET AL) <br> * column 3, line 53 - column 4, line 60; figures * | 1, 12-16 | |
| | --- | | **TECHNICAL FIELDS SEARCHED (Int. Cl.5)** |
| A | GB-A-2192863 (PLASRO PLASTICS) <br> * page 1, lines 60 - 107; figures * | 1-4, 7, 9, 10, 16, 17 | G11B <br> B65D <br> B42F |
| | --- | | |
| A | GB-A-1124225 (W.V.DROBNY) <br> * page 2, line 56 - page 3, line 52; figures * | 1, 7, 12-14, 16 | |
| | --- | | |
| A | US-A-3685684 (R.SCHINDLER ET AL) <br> * column 1, lines 24 - 67; figures * | 1-3, 7-10, 12, 16, 17 | |
| | --- | | |
| A | US-A-3348668 (H.AMATSU ET AL) <br> * column 1, line 64 - column 2, line 25; figures * | 1-4, 7, 8, 12, 16, 17 | |
| | --- | | |
| | -/-- | | |

The present search report has been drawn up for all claims

| Place of search | Date of completion of the search | Examiner |
|---|---|---|
| THE HAGUE | 25 APRIL 1990 | DECLAT M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3389942 (K. JACOB)<br>* column 3, line 6 - column 5, line 18; figures * | 1, 7-9, 12, 16, 17 | |
| A | DE-A-2939609 (TELDEC)<br>* claims 1-8; figures * | 1, 9, 11, 12, 15 | |
| A | GB-A-2148256 (GEIMUPLAST PETER MUNDT) | | |
| A | EP-A-071649 (DAI NIPPON INSATSU) | | |

TECHNICAL FIELDS SEARCHED (Int. Cl.5)

The present search report has been drawn up for all claims

| Place of search | Date of completion of the search | Examiner |
|---|---|---|
| THE HAGUE | 25 APRIL 1990 | DECLAT M.G. |